# DEMANDE DE BREVET EUROPEEN

(11) **EP 4 763 004 A1**
(43) Date de publication de la demande: **24.06.2026**
(21) Numéro de dépôt: 25224041.1
(22) Date de dépôt: 16.12.2025
(51) Int. Cl.: A47J 27/00, A47J 36/10, A47J 27/08

(54) **APPAREIL DE CUISSON ELECTRIQUE COMPRENANT UN ORGANE DE VERROUILLAGE DE COUVERCLE ET UNE CUVE DE CUISSON EQUIPEE DE POIGNEES DE CUVE**

(30) Priorité: 19.12.2024 FR 2414780
(71) Demandeur: SEB S.A., 69130 Ecully (FR)
(72) Inventeur: TURPIN, Romain, 69134 ECULLY CEDEX (FR); DUMOUX, Philippe, 69134 ECULLY CEDEX (FR); PRIETO, Guillaume, 69134 ECULLY CEDEX (FR); PETITALLOT, Johann, 69134 ECULLY CEDEX (FR); SEURAT, Frédéric, 69134 ECULLY CEDEX (FR)
(74) Mandataire: SEB Développement

(57) **Abrégé**

L'invention concerne un appareil de cuisson électrique (1) comprenant un boîtier (2), une cuve de cuisson (4), un couvercle (9) configuré pour occuper une position d'ouverture et une position de fermeture, un élément de chauffage (130) configuré pour chauffer la cuve de cuisson (4), et une unité de commande (UC) configurée pour commander le fonctionnement de l'appareil de cuisson électrique (1) selon au moins un mode de cuisson sous pression. L'appareil de cuisson électrique (1) comporte en outre un organe de verrouillage (14) déplaçable entre une position de verrouillage et une position de déverrouillage et un dispositif d'étanchéité (19) pour le mode sous pression. L'organe de verrouillage (14) délimite un passage de poignée configuré pour autoriser un passage d'au moins une poignée équipant l'appareil de cuisson électrique (1) lorsque le couvercle (9) est dans la position de fermeture et que l'organe de verrouillage (14) est dans la position de verrouillage.

## Description

### Domaine technique

La présente invention concerne de manière générale un appareil de préparation culinaire pour cuire des aliments selon au moins un mode de cuisson sous pression, tel qu'un autocuiseur électrique.

### Etat de la technique

**Il** est connu de l'art antérieur d'utiliser un appareil de cuisson électrique comprenant :
- un boîtier comprenant un logement de réception,
- une cuve de cuisson configurée pour être disposée dans le logement de réception et pour recevoir des aliments à cuire,
- un couvercle configuré pour occuper une position d'ouverture dans laquelle le couvercle autorise un accès à la cuve de cuisson, et une position de fermeture dans laquelle le couvercle empêche l'accès à la cuve de cuisson,
- un élément de chauffage configuré pour chauffer la cuve de cuisson,
- une unité de commande configurée pour commander le fonctionnement de l'appareil de cuisson électrique selon au moins un mode de cuisson sous pression,
- un organe de verrouillage, telle qu'une bague de verrouillage par exemple, déplaçable au moins entre une position de verrouillage dans laquelle l'organe de verrouillage verrouille le couvercle dans la position de fermeture et permet de réaliser une étanchéité entre la cuve de cuisson et le couvercle, et une position de déverrouillage dans laquelle le couvercle est déplaçable entre la position d'ouverture et la position de fermeture, et
- un dispositif d'étanchéité configuré pour coopérer de manière étanche avec une portion périphérique supérieure de la cuve de cuisson lorsque le couvercle est dans la position de fermeture et que l'organe de verrouillage est dans la position de verrouillage, de manière à rendre étanche une chambre de cuisson délimitée au moins en partie par la cuve de cuisson.

Ce type d'appareil de cuisson électrique est performant car il permet à un utilisateur de réaliser la cuisson d'aliments à cuire dans la cuve de cuisson selon plusieurs modes de cuisson différents, notamment un mode de cuisson sous pression dans lequel l'unité de commande active l'élément de chauffage et dans lequel la chambre de cuisson délimite un espace fermé étanche dans lequel la pression va augmenter durant la cuisson.

Afin de faciliter la préhension de la cuve de cuisson, notamment en vue de l'extraire hors du boîtier, de transférer son contenu dans un plat ou similaire, ou encore de la transporter pour réaliser le service à table par exemple, il est connu de l'art antérieur d'équiper la cuve de cuisson d'un tel appareil de cuisson électrique d'une ou plusieurs poignées de cuve.

Néanmoins, une telle configuration de la cuve de cuisson impose que la ou les poignées de cuve s'étendent en dessous de l'organe de verrouillage afin d'assurer un libre fonctionnement de l'organe de verrouillage. Ainsi, de tels appareils de cuisson électrique, combinant des poignées de cuve du type précité ainsi qu'un organe de verrouillage, présentent une hauteur plus importante que des appareils de cuisson électrique dépourvu de ces deux caractéristiques. Or, la compacité verticale d'un tel appareil de cuisson électrique est primordiale car il est courant d'équiper le couvercle d'un tel appareil avec un système de cuisson à air chaud (afin de permettre un fonctionnement de l'appareil de cuisson électrique selon un mode de cuisson sous pression et un mode de cuisson à air chaud) ce qui impacte encore la hauteur de l'appareil de cuisson électrique.

Une autre alternative connue de l'art antérieur est d'équiper le boîtier, et plus particulièrement une contre-cuve équipant ce dernier, d'une ou plusieurs échancrures débouchant dans un bord périphérique supérieur de la contre-cuve et destinée chacune au passage d'une poignée de cuve respective lorsque la cuve de cuisson est disposée dans le boîtier. Toutefois, cette configuration nécessite une fabrication spécifique et complexe du boîtier, et plus particulièrement de la contre-cuve, pour permettre le passage des poignées de cuve vers l'extérieur de l'appareil de cuisson électrique. Habituellement, les contre-cuves utilisées dans de tels appareils sont fabriquées par emboutissage, et une étape supplémentaire d'usinage est requise pour créer les échancrures précitées.

### Résumé de l'invention

Le problème technique à la base de l'invention consiste donc à fournir une alternative aux appareils de cuisson électrique connus de l'art antérieur, et en particulier un appareil de cuisson électrique qui soit de structure simple, ergonomique et économique, dont la fabrication du boîtier et notamment de sa contre-cuve est facilitée, tout en présentant une compacité en hauteur notamment lorsque l'appareil de cuisson électrique propose un mode de cuisson à air chaud.

A cet effet, la présente invention concerne un appareil de cuisson électrique comprenant :
- un boîtier comprenant un logement de réception,
- une cuve de cuisson configurée pour être disposée dans le logement de réception et pour recevoir des aliments à cuire,
- un couvercle configuré pour occuper une position d'ouverture dans laquelle le couvercle autorise un accès à la cuve de cuisson, et une position de fermeture dans laquelle le couvercle empêche l'accès à la cuve de cuisson,
- un élément de chauffage configuré pour chauffer la cuve de cuisson,
- une unité de commande configurée pour commander le fonctionnement de l'appareil de cuisson électrique selon au moins un mode de cuisson sous pression,
- un organe de verrouillage déplaçable au moins entre une position de verrouillage dans laquelle l'organe de verrouillage verrouille le couvercle dans la position de fermeture, et une position de déverrouillage dans laquelle le couvercle est déplaçable entre la position d'ouverture et la position de fermeture,
- un dispositif d'étanchéité pour la mise en œuvre du mode de cuisson sous pression, ledit dispositif d'étanchéité étant configuré pour coopérer de manière étanche avec une portion périphérique supérieure de la cuve de cuisson lorsque le couvercle est dans la position de fermeture et que l'organe de verrouillage est dans la position de verrouillage, de manière à rendre étanche une chambre de cuisson délimitée au moins en partie par la cuve de cuisson,
l'organe de verrouillage délimitant au moins en partie au moins un passage de poignée configuré pour laisser passer, de l'intérieur vers l'extérieur, au moins une poignée équipant l'appareil de cuisson électrique et provenant d'un espace interne délimité au moins en partie par l'organe de verrouillage, lorsque le couvercle est dans la position de fermeture et que l'organe de verrouillage est déplacé entre la position de verrouillage et la position de déverrouillage.

En d'autres termes, l'au moins un passage de poignée est configuré pour autoriser un déplacement de l'organe de verrouillage entre la position de verrouillage et la position de déverrouillage lorsque l'au moins une poignée s'étend à travers l'au moins un passage de poignée.

La présence de l'au moins un passage de poignée sur l'organe de verrouillage autorise le passage de l'au moins une poignée équipant l'appareil de cuisson électrique, en dessous de l'organe de verrouillage lorsque le couvercle est dans la position de fermeture et autorise un déplacement de l'organe de verrouillage dans la position de verrouillage, de manière à verrouiller efficacement le couvercle dans la position de fermeture, ceci tout en réduisant la hauteur totale de l'appareil de cuisson électrique par rapport aux alternatives connues de l'art antérieur.

En outre, un deuxième avantage résultant de la mise en œuvre de l'invention est de simplifier le processus global de fabrication de l'appareil de cuisson électrique via le report de l'étape d'usinage au moins en partie sur l'organe de verrouillage.

L'appareil de cuisson électrique peut en outre présenter une ou plusieurs des caractéristiques suivantes, qui peuvent être prises seules ou en combinaison.

Selon un mode de réalisation de l'invention, le couvercle est mobile en pivotement autour d'un axe de pivotement qui est sensiblement horizontal lorsque le boîtier repose sur une surface horizontale.

Selon un mode de réalisation de l'invention, la cuve de cuisson comporte au moins une poignée de cuve configurée pour être accessible depuis l'extérieur de l'appareil de cuisson électrique et/ou l'appareil de cuisson électrique comporte un couvercle intérieur comportant au moins une poignée de couvercle, l'au moins une poignée équipant l'appareil de cuisson électrique étant l'au moins une poignée de cuve et/ou l'au moins une poignée de couvercle. La présence d'une telle poignée de cuve permet de réaliser la cuisson des aliments dans la cuve de cuisson, puis de manipuler la cuve de cuisson au moyen de la poignée de cuve de telle sorte qu'un utilisateur peut aisément extraire la cuve de cuisson hors du logement de réception et transporter la cuve de cuisson afin de réaliser un service à table directement à partir de la cuve de cuisson, lorsque la phase de cuisson dans l'appareil de cuisson est terminée.

Selon un mode de réalisation de l'invention, l'au moins un passage de poignée est au moins en partie formé par un jeu radial entre le boîtier et l'organe de verrouillage.

Selon un mode de réalisation de l'invention, le couvercle intérieur est amovible.

Selon un mode de réalisation de l'invention, le dispositif d'étanchéité est porté par le couvercle intérieur, l'ensemble couvercle intérieur et dispositif d'étanchéité étant configuré pour occuper une position d'obturation dans laquelle ledit ensemble repose sur la cuve de cuisson et délimite avec la cuve de cuisson la chambre de cuisson, et une position de retrait dans laquelle ledit ensemble est dissocié du boîtier et autorise un accès à la cuve de cuisson lorsque le couvercle est dans la position d'ouverture.

Selon un mode de réalisation de l'invention, l'au moins un passage de poignée est configuré pour autoriser un déplacement de l'organe de verrouillage entre la position de verrouillage et la position de déverrouillage lorsque la cuve de cuisson est positionnée dans le logement de réception et/ou que le couvercle intérieur est dans la position d'obturation et que le couvercle occupe la position de fermeture.

Selon un mode de réalisation de l'invention, le couvercle intérieur est configuré pour être interposé entre le couvercle et la cuve de cuisson lorsque le couvercle occupe la position de fermeture et que le couvercle intérieur est dans la position d'obturation. La présence du couvercle intérieur permet de réaliser la cuisson d'aliment dans la cuve de cuisson à une pression supérieure à la pression atmosphérique lorsque le couvercle intérieur est dans la position d'obturation et que l'unité de commande commande un fonctionnement de l'appareil de cuisson électrique selon le mode de cuisson sous pression.

Selon un mode de réalisation de l'invention, l'au moins une poignée de couvercle est configurée pour être accessible depuis l'extérieur de l'appareil de cuisson électrique lorsque le couvercle intérieur est dans la position d'obturation.

Selon un mode de réalisation de l'invention, le couvercle intérieur comporte exactement deux poignées de couvercle qui sont symétriques par rapport à un point de symétrie. De façon avantageuse, ledit point de symétrie coïncide avec un axe central du couvercle intérieur.

Selon un mode de réalisation de l'invention, l'au moins une poignée de couvercle comprend une zone de préhension de couvercle et un support de poignée de couvercle configuré pour relier la zone de préhension de couvercle à une partie centrale du couvercle intérieur, le support de poignée de couvercle étant désaxé par rapport à la zone de préhension de couvercle.

Selon un mode de réalisation de l'invention, le support de poignée de couvercle définit un dégagement configuré pour autoriser le passage de l'organe de verrouillage. Une telle configuration de l'invention permet de limiter la largeur de l'au moins un passage de poignée.

Selon un mode de réalisation de l'invention, la cuve de cuisson comporte un corps de cuve et l'au moins une poignée de cuve est solidaire avec le corps de cuve.

Selon un mode de réalisation de l'invention, l'au moins une poignée de cuve comprend une zone de préhension et un support de poignée configuré pour relier la zone de préhension au corps de cuve de la cuve de cuisson, le support de poignée étant désaxé par rapport à la zone de préhension.

Selon un mode de réalisation de l'invention, le support de poignée définit un dégagement configuré pour autoriser le passage de l'organe de verrouillage.

Selon un mode de réalisation de l'invention, la cuve de cuisson comporte exactement deux poignées de cuve symétriques par rapport à un point de symétrie. De façon avantageuse, ledit point de symétrie coïncide avec un axe central de la cuve de cuisson par exemple.

Selon un mode de réalisation de l'invention, le boîtier comporte une contre-cuve délimitant le logement de réception.

Selon un mode de réalisation de l'invention, l'organe de verrouillage est configuré pour verrouiller le couvercle sur le boîtier lorsque l'organe de verrouillage est dans la position de fermeture.

Selon un autre mode de réalisation de l'invention, l'organe de verrouillage est configuré pour verrouiller le couvercle sur la contre-cuve lorsque l'organe de verrouillage est dans la position de fermeture.

Selon un mode de réalisation de l'invention, l'au moins un passage de poignée est au moins en partie formé par une échancrure de passage prévue sur l'organe de verrouillage, et par exemple sur une paroi périphérique de l'organe de verrouillage, l'au moins une poignée équipant l'appareil de cuisson électrique étant configurée pour faire saillie radialement à travers l'au moins une échancrure de passage.

Selon un mode de réalisation de l'invention, l'organe de verrouillage est monté mobile en rotation par rapport au couvercle autour d'un axe de verrouillage et entre la position de déverrouillage et la position de verrouillage.

Selon un mode de réalisation de l'invention, l'organe de verrouillage est sensiblement annulaire et est centré sur l'axe de verrouillage.

Selon un mode de réalisation de l'invention, la paroi périphérique est sensiblement cylindrique et s'étend autour de l'axe de verrouillage.

Selon un mode de réalisation de l'invention, l'organe de verrouillage est solidaire en pivotement avec le couvercle autour de l'axe de pivotement.

Selon un mode de réalisation de l'invention, l'organe de verrouillage comporte une pluralité d'organes de maintien configurés pour coopérer avec une pluralité d'éléments de maintien prévus sur le boîtier, et par exemple sur la contre-cuve, lorsque l'organe de verrouillage occupe la position de verrouillage et que le couvercle occupe la position de fermeture, de manière à verrouiller le couvercle dans la position de fermeture. Avantageusement, une telle configuration de l'invention permet de maintenir le couvercle dans la position de fermeture lorsque l'organe de verrouillage est dans la position de verrouillage et d'éviter un déplacement intempestif du couvercle vers la position d'ouverture.

Selon un mode de réalisation de l'invention, l'au moins un passage de poignée est délimité latéralement par deux organes de maintien appartenant à la pluralité d'organes de maintien et configurés pour être situés immédiatement de part et d'autre de l'au moins une poignée équipant l'appareil de cuisson électrique lorsque le couvercle occupe la position de fermeture.

Selon un mode de réalisation de l'invention, les deux organes de maintien délimitant l'au moins un passage de poignée, sont situés à distance de l'au moins une poignée équipant l'appareil de cuisson électrique lorsque l'organe de verrouillage évolue entre la position de verrouillage et la position de déverrouillage.

Selon un mode de réalisation de l'invention, les deux organes de maintien, configurés pour être situés immédiatement de part et d'autre de l'au moins une poignée, présentent un écartement angulaire supérieur à l'écartement angulaire entre toutes les autres paires d'organes de maintien adjacents.

Selon un mode de réalisation de l'invention, l'au moins un passage de poignée est défini au moins en partie par deux éléments de maintien appartenant à la pluralité d'éléments de maintien et configurés pour être situés immédiatement de part et d'autre de l'au moins une poignée de cuve lorsque la cuve de cuisson est disposée dans le logement de réception, et/ou de l'au moins une poignée de couvercle lorsque le couvercle interne occupe la position d'obturation.

Selon un mode de réalisation de l'invention, les deux éléments de maintien configurés pour être situés immédiatement de part et d'autre de l'au moins une poignée de cuve et/ou de l'au moins une poignée de couvercle, présentent un écartement angulaire supérieur à l'écartement angulaire entre toutes les autres paires d'éléments de maintien adjacents.

Selon un mode de réalisation de l'invention, les organes de maintien et les éléments de maintien sont décalés angulairement par rapport à l'axe de verrouillage de manière à autoriser un déplacement du couvercle depuis la position de fermeture vers la position d'ouverture lorsque l'organe de verrouillage occupe la position de déverrouillage, et de telle sorte que, lorsque l'organe de verrouillage occupe la position de verrouillage, les organes de maintien et les éléments de maintien sont respectivement en vis-à-vis de manière à empêcher un déplacement du couvercle depuis la position de fermeture vers la position d'ouverture.

Selon un mode de réalisation de l'invention, chaque élément de maintien est prévu sur la contre-cuve.

Selon un mode de réalisation de l'invention, chaque élément de maintien est configuré pour faire saillie radialement par rapport à l'axe de verrouillage et en direction de l'extérieur de l'appareil de cuisson électrique.

Selon un mode de réalisation de l'invention, chaque organe de maintien est configuré pour faire saillie radialement par rapport à l'axe de verrouillage et en direction de l'intérieur de l'appareil de cuisson électrique.

Selon un mode de réalisation de l'invention, l'axe de verrouillage est sensiblement coaxial avec un axe central du couvercle.

Selon un mode de réalisation de l'invention, l'axe de rotation du ventilateur est sensiblement coaxial avec l'axe de verrouillage de l'organe de verrouillage.

Selon un mode de réalisation de l'invention, le dispositif d'étanchéité est configuré pour s'étendre sensiblement au niveau d'une ouverture d'accès de la cuve de cuisson qui est délimitée par un bord périphérique supérieur lorsque le couvercle est dans la position de fermeture.

Selon un mode de réalisation de l'invention, le dispositif d'étanchéité est configuré pour s'étendre entre le couvercle et le bord périphérique supérieur de la cuve de cuisson lorsque le couvercle est dans la position de fermeture.

Selon un mode de réalisation de l'invention, le dispositif d'étanchéité est monté, par exemple de manière amovible, sur une face inférieure du couvercle.

Selon un mode de réalisation de l'invention, le dispositif d'étanchéité est monté, par exemple de manière amovible, sur une face inférieure du couvercle intérieur.

Selon un mode de réalisation de l'invention, le dispositif d'étanchéité est configuré pour s'étendre entre la cuve de cuisson et le couvercle intérieur lorsque le couvercle intérieur occupe la position d'obturation.

Selon un mode de réalisation de l'invention, l'ouverture d'accès délimitée par le bord périphérique supérieur de la cuve de cuisson est configurée pour autoriser l'introduction des aliments dans la cuve de cuisson lorsque le couvercle est dans la position d'ouverture.

Selon un mode de réalisation de l'invention, l'unité de commande est configurée pour commander le fonctionnement de l'appareil de cuisson électrique selon au moins un mode de cuisson sous pression et un mode de cuisson à air chaud.

Selon un mode de réalisation de l'invention, l'unité de commande est configurée pour autoriser le fonctionnement de l'appareil de cuisson électrique selon le mode de cuisson à air chaud lorsque l'organe de verrouillage est dans la position de déverrouillage.

Selon un mode de réalisation de l'invention, l'appareil de cuisson électrique comporte un système de cuisson à air chaud configuré pour générer un flux d'air chaud sur des aliments reçus dans la cuve de cuisson, le système de cuisson à air chaud comprenant un ventilateur relié mécaniquement au couvercle et configuré pour générer un flux d'air sur des aliments reçus dans la cuve de cuisson, une unité d'entraînement configurée pour entraîner en rotation le ventilateur autour d'un axe de rotation, et un dispositif de chauffage relié mécaniquement au couvercle et configuré pour chauffer le flux d'air généré par le ventilateur.

Selon un mode de réalisation de l'invention, l'élément de chauffage est disposé dans le boîtier, et est par exemple configuré pour s'étendre au niveau d'une partie inférieure de la cuve de cuisson.

Selon un mode de réalisation de l'invention, l'unité de commande est configurée pour activer l'élément de chauffage lorsque l'appareil de cuisson électrique est dans le mode de cuisson sous pression.

Selon un mode de réalisation de l'invention, le dispositif d'étanchéité est configuré de telle sorte que, lorsque l'appareil de cuisson électriques est dans le mode de cuisson sous pression, la surface de contact, qui est définie par la jonction entre le dispositif d'étanchéité et la cuve de cuisson, augmente au fur et à mesure de l'augmentation de pression à l'intérieur de la chambre de cuisson. Une telle configuration de l'appareil de cuisson électrique permet d'assurer une étanchéité au niveau du dispositif d'étanchéité lors de l'utilisation de l'appareil de cuisson électrique dans le mode de cuisson à air chaud mais également dans le mode de cuisson sous pression.

Selon un mode de réalisation de l'invention, l'organe de verrouillage est configuré pour assurer une compression du dispositif d'étanchéité lorsque le couvercle est dans la position de fermeture et que l'organe de verrouillage est dans la position de verrouillage. Une telle configuration de l'appareil de cuisson électrique permet d'améliorer l'efficacité du dispositif d'étanchéité, et donc de limiter les risques de fuite de fluide au niveau du dispositif d'étanchéité.

Selon un mode de réalisation de l'invention, l'au moins une poignée de cuve présente une largeur de poignée et l'au moins un passage de poignée présente une largeur de passage qui est strictement supérieure à la largeur de poignée. Une telle configuration de l'invention permet le passage de l'organe de verrouillage entre la position de verrouillage et la position de fermeture par un pivotement de l'organe de verrouillage autour de l'axe de verrouillage.

Selon un mode de réalisation de l'invention, l'appareil de cuisson électrique comporte une interface utilisateur configurée pour permettre à un utilisateur de sélectionner au moins un programme de cuisson.

Selon un mode de réalisation de l'invention, l'axe de verrouillage est sensiblement vertical lorsque le boîtier repose sur une surface horizontale.

Selon un mode de réalisation de l'invention, la cuve de cuisson comporte deux poignées de cuve qui sont sensiblement diamétralement opposées par rapport à un axe central de la cuve de cuisson.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
[Fig 1] est une vue schématique en coupe d'un appareil de cuisson électrique selon un premier mode de réalisation de l'invention ;
[Fig 2] est une vue partielle de dessous de l'appareil de cuisson électrique de la figure 1 montrant un organe de verrouillage, appartenant à l'appareil de cuisson électrique, occupant une position de verrouillage ;
[Fig 3] est une vue partielle en perspective de côté de l'appareil de cuisson électrique de la figure 2, montrant l'organe de verrouillage dans la position de verrouillage ;
[Fig 4] est une vue partielle de dessous de l'appareil de cuisson électrique de la figure 1 montrant l'organe de verrouillage dans une position de déverrouillage ;
[Fig 5] est une vue partielle en perspective de côté de l'appareil de cuisson électrique de la figure 4, montrant l'organe de verrouillage dans la position de déverrouillage ;
[Fig 6] est une vue partielle en perspective de côté d'un appareil de cuisson électrique selon un deuxième mode de réalisation de l'invention, comprenant un organe de verrouillage dans une position de verrouillage et un couvercle intérieur dans une position d'obturation, dans laquelle le couvercle n'est pas représentée ;
[Fig 7] est une vue en perspective de coté de l'appareil de cuisson électrique de la figure 6 ;
[Fig 8] est une vue en perspective de coté de l'appareil de cuisson électrique de la figure 6, dans lequel l'organe de verrouillage est dans une position de déverrouillage et dans lequel la cuve de cuisson n'est pas représentée ;
[Fig 9] est une vue en perspective du dessous de l'appareil de cuisson électrique de la figure 8 ;
[Fig 10] est une vue partielle de dessous de l'appareil de cuisson électrique de la figure 6, dans lequel la cuve de cuisson et la contre-cuve ne sont pas représentés.

### Description détaillée

Dans le présent document, les termes « supérieur » et « inférieur » sont définis par rapport à une utilisation normale de l'appareil de cuisson électrique durant laquelle le boîtier repose sur une surface horizontale.

A défaut de stipulation contraire, le terme « sensiblement » signifie, dans le présent document, « exactement ou à 10% ou à 10° près ».

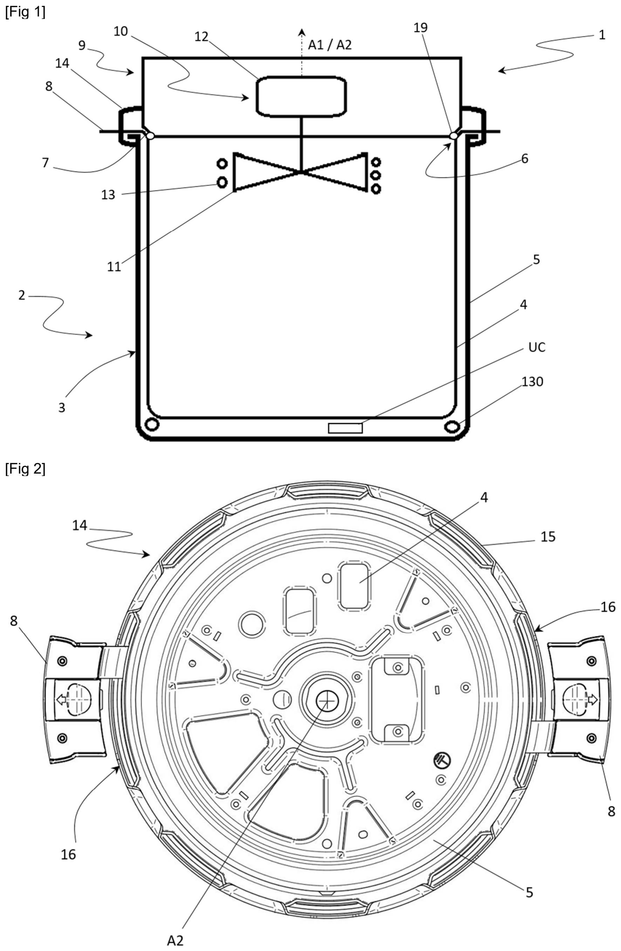

Les figures 1 à 5 représentent tout ou partie d'un appareil de cuisson électrique 1, tel qu'un autocuiseur électrique ou un multi-cuiseur électrique, selon un premier mode de réalisation de l'invention. L'appareil de cuisson électrique 1 est configuré pour la cuisson d'aliments, tels que de la viande, du poisson, des légumes ou autres, et comporte une unité de commande UC configurée pour commander un fonctionnement de l'appareil de cuisson électrique 1 selon au moins un mode de cuisson à air chaud et un mode de cuisson sous pression, et dont le fonctionnement sera détaillé ci-après.

L'appareil de cuisson électrique 1 comporte un boîtier 2 comprenant un logement de réception 3, et une cuve de cuisson 4 configurée pour être disposée de manière amovible dans le logement de réception 3 et pour recevoir des aliments à cuire. Le boîtier 2 comporte en outre une contre-cuve 5 qui délimite le logement de réception 3.

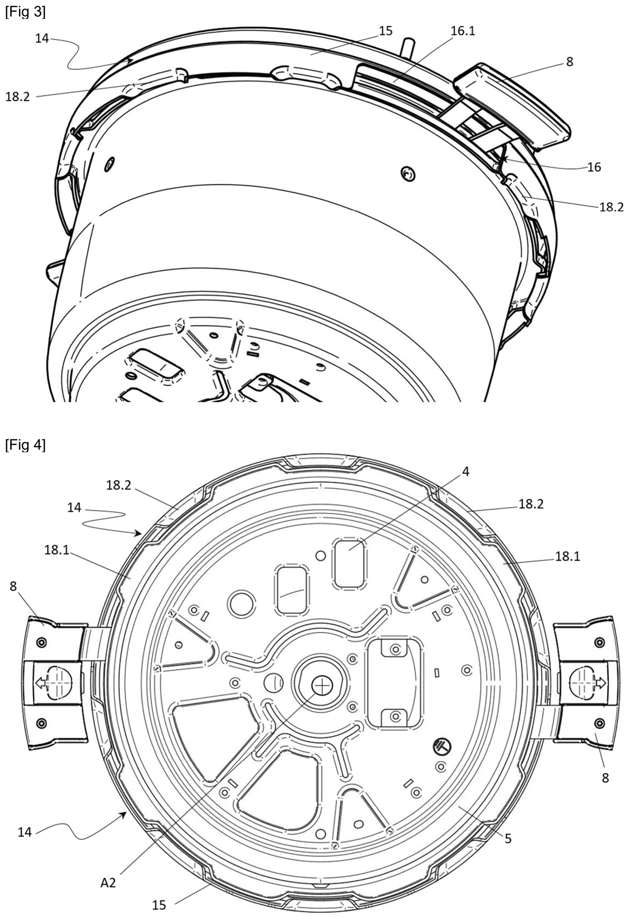

La cuve de cuisson 4 comporte une ouverture d'accès 6 délimitée par un bord périphérique supérieur 7 de la cuve de cuisson 4, à travers laquelle des aliments peuvent être introduits dans la cuve de cuisson 4. La cuve de cuisson 4 comporte en outre au moins une poignée de cuve 8 configurée pour être accessible depuis l'extérieur du boîtier 2. Selon le mode de réalisation de l'invention représenté sur les figures 1 à 5, la cuve de cuisson 4 comporte deux poignées de cuve 8 qui sont sensiblement diamétralement opposées par rapport à un axe central de la cuve de cuisson, et qui sont situées à proximité du bord périphérique supérieur 7 de la cuve de cuisson 4 (voir les figures 2 et 4). Plus particulièrement, la cuve de cuisson 4 comporte un corps de cuve et chaque poignée de cuve 8 est solidaire avec le corps de cuve.

L'appareil de cuisson électrique 1 comporte un couvercle 9, monté mobile en pivotement autour d'un axe de pivotement qui est sensiblement horizontal lorsque le boîtier 2 repose sur une surface horizontale. Le couvercle 9 est configuré pour occuper une position d'ouverture dans laquelle le couvercle 9 autorise un accès à la cuve de cuisson 4, et une position de fermeture (voir les figures 1 à 4) dans laquelle le couvercle 9 empêche l'accès à la cuve de cuisson 4 et délimite, avec la cuve de cuisson 4, une chambre de cuisson.

L'appareil de cuisson électrique 1 comporte en outre un système de cuisson à air chaud 10 disposé au moins en partie dans le couvercle 9 et configuré pour générer un flux d'air chaud sur des aliments reçus dans la cuve de cuisson 4 lorsque l'appareil de cuisson électrique 1 est dans le mode de cuisson à air chaud.

Le système de cuisson à air chaud 10 comprend un ventilateur 11 relié mécaniquement au couvercle 9 et configuré pour générer un flux d'air sur des aliments reçus dans la cuve de cuisson 4, une unité d'entraînement 12 configurée pour entraîner en rotation le ventilateur 11 autour d'un axe de rotation A1, et un dispositif de chauffage 13, comportant une résistance électrique chauffante, relié mécaniquement au couvercle 9 et configuré pour chauffer le flux d'air généré par le ventilateur 11. De façon avantageuse, le ventilateur 11 et le dispositif de chauffage 13 sont respectivement configurés pour s'étendre au moins en partie en regard de la cuve de cuisson 4, et plus particulièrement en regard de l'ouverture d'accès 6, lorsque le couvercle 9 est dans la position de fermeture.

L'appareil de cuisson électrique 1 comporte en outre un élément de chauffage 130 configuré pour chauffer la cuve de cuisson 4. De façon avantageuse, l'élément de chauffage 130 est disposé dans le boîtier 2, et est par exemple configuré pour s'étendre au niveau d'une partie inférieure de la cuve de cuisson 4. L'unité de commande UC est en particulier configurée pour activer l'élément de chauffage 130 lorsque l'appareil de cuisson électrique 1 est dans le mode de cuisson sous pression.

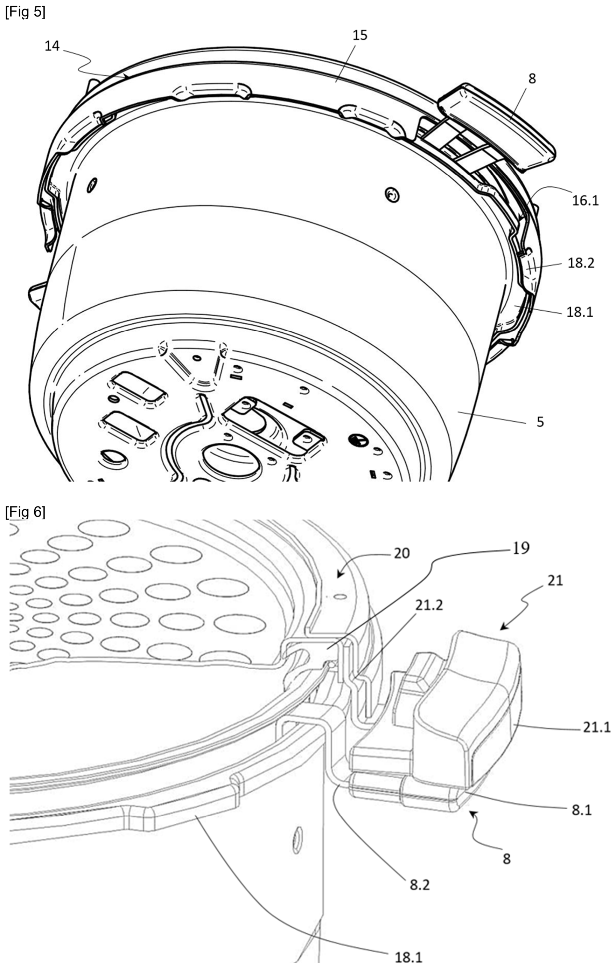

L'appareil de cuisson électrique 1 comporte également un organe de verrouillage 14, tel qu'une bague de verrouillage par exemple, qui est déplaçable entre une position de verrouillage dans laquelle l'organe de verrouillage 14 verrouille le couvercle 9 sur le boîtier 2 ou sur la contre-cuve 5 et dans la position de fermeture (voir les figures 2 et 3), et une position de déverrouillage dans laquelle l'organe de verrouillage 14 libère le couvercle 9 et autorise un déplacement du couvercle 9 entre la position d'ouverture et la position de fermeture (voir les figures 4 et 5). Plus particulièrement, l'organe de verrouillage 14 est monté mobile en rotation entre la position de déverrouillage et la position de verrouillage par rapport au couvercle 9 autour d'un axe de verrouillage A2 qui est sensiblement vertical lorsque le boîtier 2 repose sur une surface horizontale. En outre, l'organe de verrouillage 14 est solidaire en pivotement avec le couvercle 9 autour de l'axe de pivotement. De façon avantageuse, l'axe de verrouillage A2 est sensiblement coaxial avec un axe central du couvercle 9 et avec l'axe de rotation A1 du ventilateur 11 couvercle 9.

Comme représenté plus spécifiquement sur les figures 2 à 5, l'organe de verrouillage 14 est sensiblement annulaire et est centré sur l'axe de verrouillage A2. L'organe de verrouillage 14 comporte notamment une paroi périphérique 15 qui est sensiblement cylindrique et qui s'étend autour de l'axe de verrouillage A2.

L'organe de verrouillage 14 délimite au moins en partie au moins un passage de poignée 16 configuré pour autoriser un passage d'une poignée de cuve 8 respective appartenant à la cuve de cuisson 4 lorsque la cuve de cuisson 4 est positionnée dans le logement de réception 3, que le couvercle 9 est dans la position de fermeture et que l'organe de verrouillage 14 est dans la position de déverrouillage. En outre, l'au moins un passage de poignée 16 est configuré pour autoriser un déplacement de l'organe de verrouillage 14 entre la position de verrouillage et la position de déverrouillage lorsque la cuve de cuisson 4 est positionnée dans le logement de réception 3 et que le couvercle 9 occupe la position de fermeture. De façon avantageuse, l'organe de verrouillage 14 délimite au moins en partie deux passages de poignée 16 qui sont diamétralement opposés par rapport à l'axe de verrouillage A2 et qui sont configurés pour autoriser chacun le passage d'une poignée de cuve 8 respective.

Selon le premier mode de réalisation de l'invention, le ou chaque passage de poignée 16 est formé par une échancrure de passage 16.1 prévue sur l'organe de verrouillage 14, et plus particulièrement sur la paroi périphérique 15 de l'organe de verrouillage 14. L'échancrure de passage 16.1 est configurée pour autoriser la poignée de cuve 8 respective à faire saillie radialement à travers ladite échancrure de passage 16.1. La, ou chaque, poignée de cuve 8 est plus particulièrement configurée pour faire saillie radialement au-delà du boîtier 2 et de l'organe de verrouillage 14 et pour être située à l'extérieur de l'appareil de cuisson électrique 1 lorsque la cuve de cuisson 4 est reçue dans le logement de réception 3.

Une telle configuration de l'appareil de cuisson électrique 1 permet de réaliser la cuisson des aliments dans la cuve de cuisson 4, puis de manipuler la cuve de cuisson 4 au moyen de la ou des poignée(s) de cuve 8 de telle sorte qu'un utilisateur peut réaliser un service à table directement à partir de la cuve de cuisson 4 lorsque la phase de cuisson dans l'appareil de cuisson électrique 1 est terminée. En outre, la présence des passages de poignée 16 sur l'organe de verrouillage 14 permet d'autoriser le passage des poignées de cuve 8 lorsque le couvercle 9 est dans la position de fermeture et que l'organe de verrouillage 14 est dans la position de verrouillage.

Selon le premier mode de réalisation de l'invention, la ou chaque poignée de cuve 8 comporte une zone de préhension 8.1 et un support de poignée 8.2 configuré pour relier la zone de préhension 8.1 au corps de cuve de la cuve de cuisson, le support de poignée 8.2 étant désaxé par rapport à la zone de préhension 8.1. En outre, le ou chaque passage de poignée 16 présente une largeur de passage qui est strictement supérieure à la somme de la largeur du support de poignée 8.2 respectif et de la course de déplacement angulaire de l'organe de verrouillage 14 entre la position de verrouillage et la position de déverrouillage. Une telle configuration de l'invention permet le passage de l'organe de verrouillage 14 entre la position de verrouillage et la position de fermeture par un pivotement de l'organe de verrouillage 14 autour de l'axe de verrouillage A2, sans risque de conflit avec la ou les poignées de cuve 8.

L'appareil de cuisson électrique 1 comporte en outre une pluralité d'éléments de maintien 18.1 prévus sur le boîtier 2, et plus particulièrement prévus sur la contre-cuve 5, et une pluralité d'organes de maintien 18.2 prévus sur l'organe de verrouillage 14. La pluralité d'éléments de maintien 18.1 et la pluralité d'organes de maintien 18.2 sont configurées de telle sorte que, lorsque l'organe de verrouillage 14 occupe la position de déverrouillage, les organes de maintien 18.2 et les éléments de maintien 18.1 sont décalés angulairement par rapport à l'axe de verrouillage A2 de manière à autoriser un déplacement du couvercle 9 depuis la position de fermeture vers la position d'ouverture, et de telle sorte que, lorsque l'organe de verrouillage 14 occupe la position de verrouillage, les organes de maintien 18.2 et les éléments de maintien 18.1 sont respectivement en vis-à-vis de manière à empêcher un déplacement du couvercle 9 depuis la position de fermeture vers la position d'ouverture.

Les éléments de maintien 18.1 et les organes de maintien 18.2 sont répartis de façon non constante respectivement autour d'un axe central de la contre-cuve 5 et d'un axe central de l'organe de verrouillage 14.

En particulier, et comme représenté plus spécifiquement sur les figures 2 à 4, chaque passage de poignée 16 est délimité latéralement par deux organes de maintien 18.2 configurés pour être situés immédiatement de part et d'autre de la poignée de cuve 8 respective lorsque le couvercle 9 est dans la position de fermeture. Les deux organes de maintien 18.2 situés immédiatement de part et d'autre du passage de poignée 16 respectif présentent plus particulièrement un écartement angulaire supérieur à l'écartement angulaire entre toutes les autres paires d'organes de maintien 18.2. En outre, les deux organes de maintien 18.2 délimitant chaque passage de poignée 16 sont situés à distance de chaque poignée de cuve 8 lorsque l'organe de verrouillage 14 évolue entre la position de verrouillage et la position de déverrouillage.

Selon le premier mode de réalisation de l'invention, chaque élément de maintien 18.1 est configuré pour faire saillie radialement par rapport à l'axe de verrouillage A2 et en direction de l'extérieur de l'appareil de cuisson électrique 1, tandis que chaque organe de maintien 18.2 est configuré pour faire saillie radialement par rapport à l'axe de verrouillage A2 et en direction de l'intérieur de l'appareil de cuisson électrique 1 (voir les figures 2 à 5).

L'appareil de cuisson électrique 1, dans une configuration d'appareil de cuisson électrique 1 sans couvercle intérieur, comporte en outre un dispositif d'étanchéité 19 (visible sur la figure 1) configuré pour assurer l'étanchéité nécessaire au mode de cuisson sous pression dans la position de fermeture de l'appareil de cuisson électrique 1.

Selon le premier mode de réalisation de l'invention, le dispositif d'étanchéité 19 est annulaire et est configuré pour s'étendre sensiblement au niveau de l'ouverture d'accès 6 et pour coopérer avec une portion périphérique supérieure de la cuve de cuisson 4 lorsque le couvercle 9 est dans la position de fermeture. Plus spécifiquement, le dispositif d'étanchéité 19 peut être monté de manière amovible sur une face inférieure du couvercle 9.

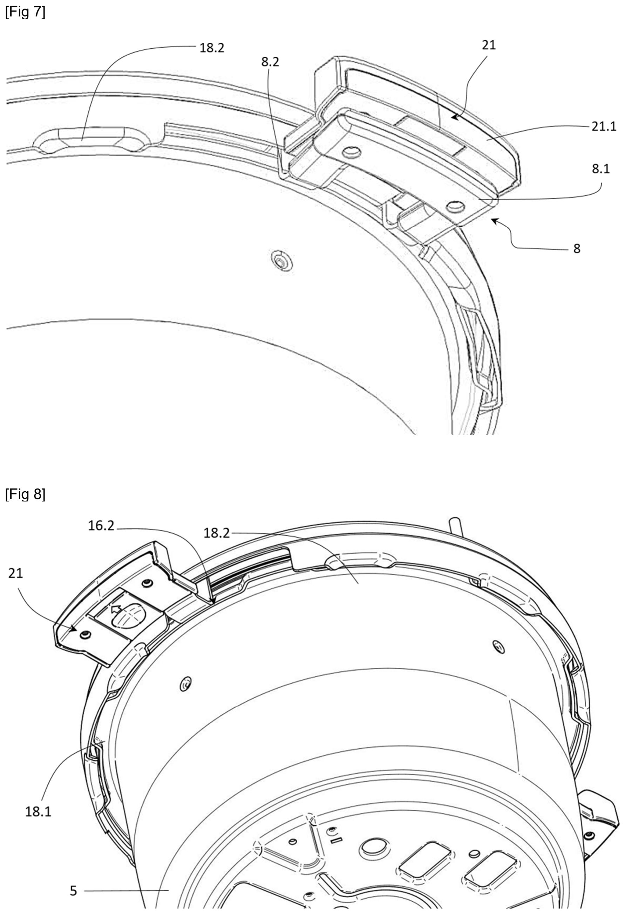

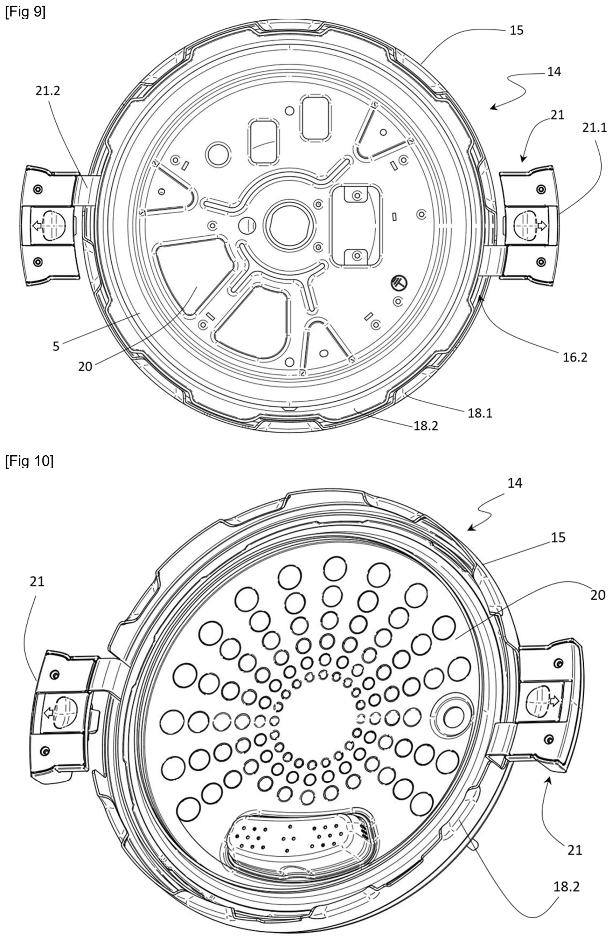

Les figures 6 à 10 représentent un appareil de cuisson électrique 1 selon un deuxième mode de réalisation de l'invention qui diffère du premier mode de réalisation essentiellement en ce que le passage de poignée 16 est délimité essentiellement par un jeu radial 16.2 entre le boîtier 2 et l'organe de verrouillage 14, et plus particulièrement entre la contre-cuve 5 et la paroi périphérique 15 de l'organe de verrouillage 14. Une telle caractéristique de l'appareil de cuisson électrique 1 impose un cheminement des poignées de cuve 8 à travers les passages de poignée 16 qui n'est plus simplement radial, chaque poignée de cuve 8 devant contourner l'extrémité inférieure de la paroi périphérique 15 avant de s'étendre radialement vers l'extérieur de l'appareil de cuisson électrique 1.

Selon le deuxième mode de réalisation de l'invention, l'appareil de cuisson électrique 1 comporte un couvercle intérieur 20, le dispositif d'étanchéité 19 étant porté par ce couvercle intérieur 20. L'ensemble comprenant le couvercle intérieur 20 et le dispositif d'étanchéité 19 est amovible entre une position d'obturation dans laquelle ledit ensemble repose sur la cuve de cuisson 4 et délimite avec la cuve de cuisson 4 la chambre de cuisson, et une position de retrait dans laquelle ledit ensemble est dissocié du boîtier 2 et autorise un accès à la cuve de cuisson 4 lorsque le couvercle 9 est dans la position d'ouverture. L'ensemble comprenant le couvercle intérieur 20 et le dispositif d'étanchéité 19 est utilisé dans le mode de cuisson sous pression dans le but d'assurer l'étanchéité de la chambre de cuisson.

Ainsi, l'ensemble comprenant le couvercle intérieur 20 et le dispositif d'étanchéité 19 est configuré pour être interposé entre le couvercle 9 et la cuve de cuisson 4 lorsque le couvercle 9 occupe la position de fermeture et que ledit ensemble est dans la position d'obturation. Dans le deuxième mode de réalisation de l'invention, le dispositif d'étanchéité 19 peut également être monté de manière amovible sur une face inférieure du couvercle intérieur 20. La présence de l'ensemble comprenant le couvercle intérieur 20 et le dispositif d'étanchéité 19 permet de réaliser la cuisson d'aliment dans la cuve de cuisson 4 à une pression supérieure à la pression atmosphérique lorsque ledit ensemble est dans la position d'obturation, que l'organe de verrouillage 14 est dans la position de verrouillage, et que l'unité de commande UC commande le fonctionnement de l'appareil de cuisson électrique 1 selon le mode de cuisson sous pression.

Avantageusement, la coopération entre la pluralité d'organes de maintien 18.2 et la pluralité d'éléments de maintien 18.1 permet, lorsque le couvercle 9 est dans la position de fermeture et que l'organe de verrouillage 14 est dans la position de verrouillage, d'assurer une compression du dispositif d'étanchéité 19 entre le couvercle intérieur 20 et la portion périphérique supérieure de la cuve de cuisson 4. Une telle configuration de l'appareil de cuisson électrique 1 permet d'améliorer l'efficacité du dispositif d'étanchéité 19, et donc de limiter les risques de fuite de fluide au niveau du dispositif d'étanchéité 19 lorsque l'appareil de cuisson électrique 1 est dans le mode de cuisson sous pression.

Avantageusement, le couvercle intérieur 20 comporte au moins une poignée de couvercle 21 configurée pour être accessible depuis l'extérieur de l'appareil de cuisson électrique 1 lorsque l'ensemble comprenant le couvercle intérieur 20 et le dispositif d'étanchéité 19 est dans la position d'obturation, le ou chaque passage de poignée 16 étant configuré pour laisser passer, de l'intérieur vers l'extérieur, l'au moins une poignée de couvercle 21 lorsque l'ensemble comprenant le couvercle intérieur 20 et le dispositif d'étanchéité 19 est dans la position d'obturation. En outre, la ou chaque poignée de couvercle 21 est configurée pour être située en regard d'une poignée de cuve 8 respective.

L'au moins une poignée de couvercle 21 comprend une zone de préhension de couvercle 21.1 et un support de poignée de couvercle 21.2 configuré pour relier la zone de préhension de couvercle 21.1 à une partie centrale du couvercle intérieur 20, le support de poignée de couvercle 21.2 étant désaxé par rapport à la zone de préhension de couvercle 21.1. Par ailleurs, le support de poignée de couvercle 21.2 définit un dégagement configuré pour autoriser le passage de l'organe de verrouillage 14. Une telle configuration de l'invention permet de limiter la largeur de l'au moins un passage de poignée 16.

Dans une telle configuration de l'appareil de cuisson électrique 1, le ou chaque passage de poignée 16 est configuré pour autoriser un passage de la poignée de couvercle 21 respective lorsque le couvercle 9 est dans la position de fermeture et que l'organe de verrouillage 14 est dans la position de verrouillage.

Selon le deuxième mode de réalisation de l'invention, le couvercle intérieur 20 comporte exactement deux poignées de couvercle 21 qui sont symétriques par rapport à un point de symétrie, ledit point de symétrie coïncidant avec un axe central du couvercle intérieur 20 par exemple.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Appareil de cuisson électrique (1) comprenant :
- un boîtier (2) comprenant un logement de réception (3),
- une cuve de cuisson (4) configurée pour être disposée dans le logement de réception (3) et pour recevoir des aliments à cuire,
- un couvercle (9) configuré pour occuper une position d'ouverture dans laquelle le couvercle (9) autorise un accès à la cuve de cuisson (4), et une position de fermeture dans laquelle le couvercle (9) empêche l'accès à la cuve de cuisson (4),
- un élément de chauffage (130) configuré pour chauffer la cuve de cuisson (4),
- une unité de commande (UC) configurée pour commander le fonctionnement de l'appareil de cuisson électrique (1) selon au moins un mode de cuisson sous pression,
- un organe de verrouillage (14) déplaçable au moins entre une position de verrouillage dans laquelle l'organe de verrouillage (14) verrouille le couvercle (9) dans la position de fermeture, et une position de déverrouillage dans laquelle le couvercle (9) est déplaçable entre la position d'ouverture et la position de fermeture,
- un dispositif d'étanchéité (19) pour la mise en œuvre du mode de cuisson sous pression, ledit dispositif d'étanchéité étant configuré pour coopérer de manière étanche avec une portion périphérique supérieure de la cuve de cuisson (4) lorsque le couvercle (9) est dans la position de fermeture et que l'organe de verrouillage (14) est dans la position de verrouillage, de manière à rendre étanche une chambre de cuisson délimitée au moins en partie par la cuve de cuisson,
**caractérisé en ce que** l'organe de verrouillage (14) délimite au moins en partie au moins un passage de poignée (16) configuré pour laisser passer, de l'intérieur vers l'extérieur, au moins une poignée équipant l'appareil de cuisson électrique (1) et provenant d'un espace interne délimité au moins en partie par l'organe de verrouillage (11), lorsque le couvercle (9) est dans la position de fermeture et que l'organe de verrouillage (14) est déplacé entre la position de verrouillage et la position de déverrouillage.

2. Appareil de cuisson électrique (1) selon la revendication 1, dans lequel la cuve de cuisson (4) comporte au moins une poignée de cuve (8) configurée pour être accessible depuis l'extérieur de l'appareil de cuisson électrique (1) et/ou l'appareil de cuisson électrique (1) comporte un couvercle intérieur (20) comportant au moins une poignée de couvercle (21), l'au moins une poignée équipant l'appareil de cuisson électrique (1) étant l'au moins une poignée de cuve (8) et/ou l'au moins une poignée de couvercle (21).

3. Appareil de cuisson électrique (1) selon la revendication 2, dans lequel le dispositif d'étanchéité (19) est porté par le couvercle intérieur (20), l'ensemble couvercle intérieur (20) et dispositif d'étanchéité (19) étant configuré pour occuper une position d'obturation dans laquelle ledit ensemble repose sur la cuve de cuisson (4) et délimite, avec la cuve de cuisson (4), la chambre de cuisson, et une position de retrait dans laquelle ledit ensemble est dissocié du boîtier (2).

4. Appareil de cuisson électrique (1) selon la revendication 3, dans lequel l'au moins une poignée de couvercle (21) est configurée pour être accessible depuis l'extérieur de l'appareil de cuisson électrique (1) lorsque le couvercle intérieur (20) est dans la position d'obturation.

5. Appareil de cuisson électrique (1) selon l'une quelconque des revendications 2 à 4, dans lequel l'au moins une poignée de couvercle (21) comprend une zone de préhension de couvercle (21.1) et un support de poignée de couvercle (21.2) configuré pour relier la zone de préhension de couvercle (21.1) à une partie centrale du couvercle intérieur (20), le support de poignée de couvercle (21.2) étant désaxé par rapport à la zone de préhension de couvercle (21.1).

6. Appareil de cuisson électrique (1) selon la revendication 5, dans lequel le support de poignée de couvercle (21.1) définit un dégagement configuré pour autoriser le passage de l'organe de verrouillage (14).

7. Appareil de cuisson électrique (1) selon l'une quelconque des revendications 2 à 6, dans lequel l'au moins une poignée de cuve (8) comprend une zone de préhension (8.1) et un support de poignée (8.2) configuré pour relier la zone de préhension (8.1) à un corps de cuve de la cuve de cuisson (4), le support de poignée (8.2) étant désaxé par rapport à la zone de préhension (8.1).

8. Appareil de cuisson électrique (1) selon la revendication 7, dans lequel le support de poignée (8.2) définit un dégagement configuré pour autoriser le passage de l'organe de verrouillage (14).

9. Appareil de cuisson électrique (1) selon l'une quelconque des revendications 1 à 8, dans lequel l'au moins un passage de poignée (16) est au moins en partie formé par une échancrure de passage (16.1) prévue sur l'organe de verrouillage (14), l'au moins une poignée équipant l'appareil de cuisson électrique (1) étant configurée pour faire saillie radialement à travers l'au moins une échancrure de passage (16.1).

10. Appareil de cuisson électrique (1) selon l'une quelconque des revendications 1 à 9, dans lequel l'organe de verrouillage (14) est monté mobile en rotation par rapport au couvercle (9) autour d'un axe de verrouillage (A2) et entre la position de déverrouillage et la position de verrouillage.

11. Appareil de cuisson électrique (1) selon l'une quelconque des revendications 1 à 10, dans lequel l'organe de verrouillage (14) comporte une pluralité d'organes de maintien (18.2) configurés pour coopérer avec une pluralité d'éléments de maintien (18.1) prévus sur le boîtier (2) lorsque l'organe de verrouillage (14) occupe la position de verrouillage et que le couvercle (9) occupe le positon de fermeture, de manière à verrouiller le couvercle (9) dans la position de fermeture.

12. Appareil de cuisson électrique (1) selon la revendication 11, dans lequel l'au moins un passage de poignée (16) est délimité latéralement par deux organes de maintien (18.2) appartenant à la pluralité d'organes de maintien (18.2) et configurés pour être situés immédiatement de part et d'autre de l'au moins une poignée équipant l'appareil de cuisson électrique (1) lorsque le couvercle (9) occupe la position de fermeture.

13. Appareil de cuisson électrique (1) selon la revendication 12, dans lequel les deux organes de maintien (18.2) délimitant l'au moins un passage de poignée (16) sont situés à distance de l'au moins une poignée équipant l'appareil de cuisson électrique (1) lorsque l'organe de verrouillage (14) évolue entre la position de verrouillage et la position de déverrouillage.

14. Appareil de cuisson électrique (1) selon l'une quelconque des revendications 1 à 13, lequel comporte un système de cuisson à air chaud (10) configuré pour générer un flux d'air chaud sur des aliments reçus dans la cuve de cuisson (4), le système de cuisson à air chaud (10) comprenant un ventilateur (11) relié mécaniquement au couvercle (9) et configuré pour générer un flux d'air sur des aliments reçus dans la cuve de cuisson (4), une unité d'entraînement (12) configurée pour entraîner en rotation le ventilateur (11) autour d'un axe de rotation (A1), et un dispositif de chauffage (13) relié mécaniquement au couvercle (9) et configuré pour chauffer le flux d'air généré par le ventilateur (11).

15. Appareil de cuisson électrique (1) selon l'une quelconque des revendications précédentes, dans lequel l'organe de verrouillage (14) est configuré pour assurer une compression du dispositif d'étanchéité (19) lorsque le couvercle (9) est dans la position de fermeture et que l'organe de verrouillage (14) est dans la position de verrouillage.
